(19)

Europäisches
Patentamt
European
Patent Office
Office européen
des brevets

(11) **EP 4 509 865 A1**

(12) **EUROPEAN PATENT APPLICATION**

(43) Date of publication:
**19.02.2025 Bulletin 2025/08**

(21) Application number: **24191225.2**

(22) Date of filing: **26.07.2024**

(51) International Patent Classification (IPC):
**G01S 7/35** *(2006.01)*  **G01S 13/32** *(2006.01)*
**G01S 13/34** *(2006.01)*  **G01S 13/58** *(2006.01)*

(52) Cooperative Patent Classification (CPC):
**G01S 7/356; G01S 13/325; G01S 13/343;
G01S 13/584**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.08.2023 US 202318235544**

(71) Applicant: **NXP B.V.**
**5656 AG Eindhoven (NL)**

(72) Inventors:
• **Van Houtum, Wilhemus Johannes**
**5656AG Eindhoven (NL)**
• **Pandharipande, Ashish**
**5656AG Eindhoven (NL)**
• **Oliari Couto Dias, Vinicius**
**5656AG Eindhoven (NL)**

(74) Representative: **Schmütz, Christian Klaus
Johannes
NXP Semiconductors Germany GmbH
Intellectual Property Group
Beiersdorfstr. 12
22529 Hamburg (DE)**

(54) **DIGITAL CHIRP OFDM RADAR AND RADAR SENSING METHODS**

(57) A radar transceiver includes a radar transmitter and a radar receiver. The radar transmitter includes generation circuitry to generate a digital radar chirp sequence, and one or more digital-to-analog converters to convert the digital radar chirp sequence into a radar signal to be transmitted via one or more transmit antennas. The radar receiver includes one or more analog-to-digital converters to convert a received reflection of the radar signal to a received digital signal, and a mixer to mix the received digital signal with the digital chirp sequence to generate a digital de-chirped signal for velocity estimation followed by range estimation.

**FIG. 1**

EP 4 509 865 A1

**Description**

BACKGROUND

Radar is used to detect objects and determine information about the objects such as their range, velocity, direction, or material. Modem automobiles are increasingly relying on radar to support autonomous driving or other driver assistance functions. Conventional automotive radar systems generally utilize frequency modulated continuous wave (FMCW) waveforms due to the simplicity in the radar receiver architecture for such waveforms. Alternative radar systems with digital radar signal modulation can provide increased flexibility in digitally generating and processing the radar waveforms as well as allowing for the integration of radar with other communication technologies such as Fifth Generation (5G) wireless communications. However, in some cases, integrating radar with these sophisticated wireless communication systems increases the complexity of radar signal generation and radar signal processing.

SUMMARY

In a first embodiment, a radar transceiver includes a radar transmitter and a radar received. The radar transmitter includes generation circuitry to generate a digital radar chirp sequence and one or more digital-to-analog converters to convert the digital radar chirp sequence into a radar signal to be transmitted via one or more transmit antennas. The radar receiver includes one or more analog-to-digital converters to convert a received reflection of the radar signal to a received digital signal. The radar received also includes a mixer to mix the received digital signal with the digital radar chirp sequence to generate a digital de-chirped signal for velocity processing followed by range processing.

In some aspects of the first embodiment, the radar transmitter is an orthogonal frequency digital multiplexing (OFDM) transmitter. For example, in some aspects, the digital radar chirp sequence is digitally modulated. In some aspects of the first embodiment, the radar receiver includes a serial-to-parallel converter to parallelize the digital de-chirped signal into a plurality of digital data streams. In some aspects of the first embodiment, the radar receiver includes a first fast Fourier transform (FFT) component to apply a first FFT to data in the digital de-chirped signal in a first dimension corresponding to a slow time to generate velocity information associated with the received reflection. In some aspects of the first embodiment, the radar receiver includes a second FFT component after the first FFT component to apply a second FFT to data in the digital de-chirped signal in a second dimension corresponding to a fast time to generate range information associated with the received reflection. In some aspects of the first embodiment, the generation circuitry comprises an inverse fast Fourier transform (FFT) component and a parallel-to-serial converter to receive the plurality of radar symbols and generate the digital radar chirp sequence. In some aspects of the first embodiment, there is no cyclic prefix inserted into the digital radar chirp sequence (i.e., a cyclic prefix is absent from the digital radar chirp sequence). In some aspects of the first embodiment, the radar transmitter includes one or more transmit antennas to transmit the radar signal. In some aspects of the first embodiment, the radar transmitter includes one or more receive antennas to receive the received reflection of the radar signal.

In a second embodiment, a method includes generating, at a transmitter of a radar transceiver, a radar signal for transmission based on a digital radar chirp sequence generated using orthogonal frequency digital multiplexing (OFDM) and transmitting the radar signal via one or more transmit antennas of the transmitter. The method further includes receiving a reflection of the radar signal at one or more receive antennas coupled to a receiver of the radar transceiver and converting, at one or more analog-to-digital converters, the received reflection to a received digital signal. The method also includes mixing the received digital signal with the digital radar chirp sequence to generate a digital de-chirped signal for velocity processing followed by range processing.

In some aspects of the second embodiment, the method includes converting the digital radar chirp sequence into the radar signal via one or more digital-to-analog converters. In some aspects of the second embodiment, the method includes parallelizing the digital de-chirped signal into a plurality of digital data streams prior to the velocity processing and the range processing. In some aspects of the second embodiment, the method includes performing the velocity processing of the received reflection based on the plurality of digital data streams. In some aspects of the second embodiment, the method includes performing the range processing based on a result of the velocity processing. In some aspects of the second embodiment, the method includes converting a signal representative of a radar waveform into a plurality of radar symbols over different frequency carriers. In some aspects of the second embodiment, the method includes generating the digital radar chirp sequence based on the plurality of radar symbols. In some aspects of the second embodiment, the method includes generating the digital radar chirp sequence without inserting a cyclic prefix in the digital radar chirp sequence.

In a third embodiment, a radar processing device includes one or more transmit antennas for transmitting a radar signal based on a digital radar chirp sequence and one or more receive antennas for receiving a reflection of the radar signal. The radar processing device also includes signal processing circuitry to convert the received reflection of the radar signal to a received digital signal and to mix the received digital signal with the digital radar chirp sequence to a digital de-chirped signal for velocity processing followed by range processing.

In some aspects of the third embodiment, mixing the received digital signal with the digital radar chirp sequence to a digital de-chirped signal includes multiplying the digital radar chirp sequence with a complex conjugate of the received digital signal.

BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.

FIG. 1 shows an example of a radar transceiver configured to implement Orthogonal Frequency Division Multiplexing (OFDM) radar sensing techniques in accordance with various embodiments.

FIGs. 2-5 show detailed views highlighting different components of the radar transceiver of FIG. 1 in accordance with various embodiments.

FIG. 6 shows an example of another embodiment of a radar transceiver in accordance with various embodiments.

FIG. 7 shows an example series of OFDM radar signal processing diagrams in accordance with various embodiments.

FIG. 8 shows an example of a flowchart illustrating a method for OFDM radar signal generation and processing in accordance with various embodiments.

FIG. 9 shows an example of a flowchart describing a method for velocity and range estimation in accordance with various embodiments.

FIG. 10 shows an example of a vehicular control system in accordance with various embodiments.

DETAILED DESCRIPTION

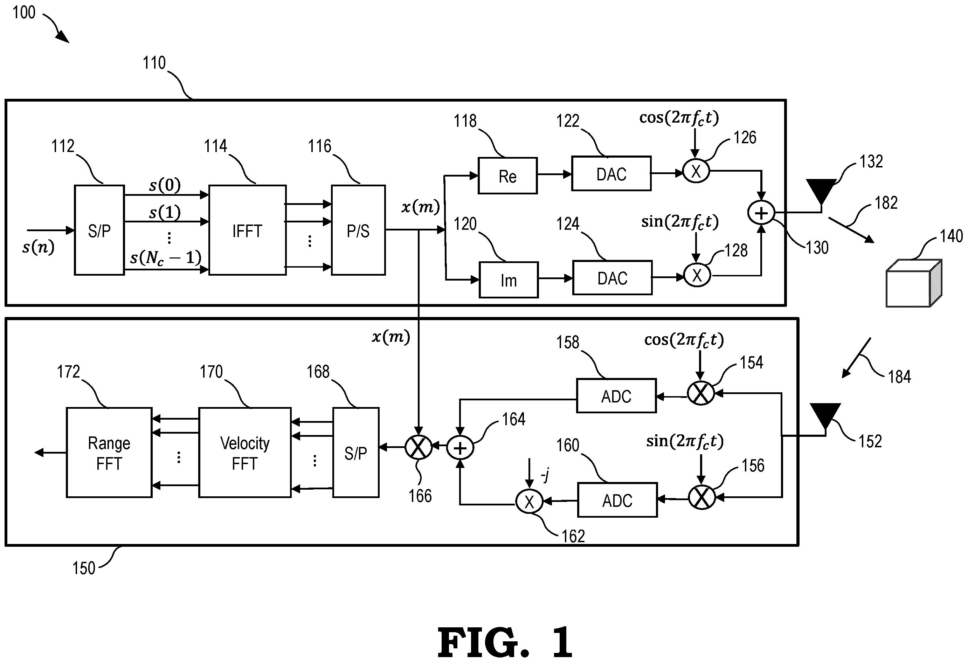

Digital Orthogonal Frequency Division Multiplexing (OFDM) radar allows for joint wireless communication and radar sensing since modem wireless communication systems (e.g., 5G wireless communications, upcoming Generation (6G) wireless communications, and beyond) are or will likely be based on OFDM. In addition, digital OFDM radar (also referred to herein as ODFM radar for simplicity) provides increased flexibility for digital generation and processing of radar waveforms. However, OFDM signal generation and processing systems are typically more complex compared to the FMCW signal generation and processing systems employed by conventional radar. For example, OFDM signal generation and processing systems typically include circuitry for the insertion of a cyclic prefix (CP) in the generated digital signal to provide a guard interval to eliminate intersymbol interference. OFDM receivers are configured with additional components to identify and discard the CP in the received signal prior to extracting the data from the received signal. This, along with other OFDM-specific signal processing factors, generally results in a more complex signal generation and processing system. FIGs. 1-10 provide an OFDM radar system with a simplified receiver architecture that facilitates baseband digital radar processing, thereby allowing for OFDM radar integration with other wireless communication systems without unduly increasing the complexity of the OFDM radar system.

To illustrate, in some embodiments, a radar transceiver includes a radar transmitter and a radar receiver. The radar transmitter includes radar signal generation circuitry to generate a digital radar chirp sequence and one or more digital-to-analog converters (DACs) to convert the digital radar chirp sequence into an analog radar signal to be transmitted via one or more transmit antennas. The radar receiver includes one or more analog-to-digital converters (ADCs) to convert received reflections of the radar signal to a digital received signal and a mixer to mix the digital received signal with the digital chirp sequence to generate a digital de-chirped signal that is then used for velocity and range estimation. A velocity FFT performs the velocity estimation based on the digital de-chirped signal and a range FFT component performs the range estimation based on the output of the velocity FFT. Thus, in some embodiments, the range FFT (i.e., the second FFT) outputs values indicative of the range and velocity of the one or more objects detected by the reflections of the radar signal. In some embodiments, the radar receiver does not include a demultiplexing FFT, a spectral data removal component, or a cyclic prefix removal component since they are not necessary for demodulating and processing the fast chirp radar signals to obtain the range and velocity of detected objects according to the techniques described herein. Thus, the OFDM radar transceiver architecture is simplified while allowing for integration with more complex OFDM-based systems such as 5G or 6G wireless communications.

To further illustrate, in some embodiments, the techniques presented herein provide a digital-chirp modulation scheme in an OFDM radar system that employs a frequency carrier grid of the same size as a transmission and reception (Tx/Rx) FFT grid employed in wireless communication systems such as 5G wireless communications. At the radar receiver, after in-phase and quadrature (I/Q) demodulation of the received signal, a mixer in the radar receiver generates a digital de-chirped signal by multiplying the digitized received signal by the digital chirp sequence used to generate the radar signal transmitted by the radar transmitter. The radar receiver further includes FFT processing components to process the digital de-chirped signal. First, a velocity FFT estimates the Doppler effect associated with a detected object based on the digital de-chirped signal to generate a velocity estimate. Then, a range FFT estimates the range of (i.e., distance to) the detected object based on the output of the velocity FFT. The OFDM radar techniques presented herein differ from conventional methods in that the techniques of this disclosure implement a digital de-chirping feature that is followed by velocity FFT processing and then range FFT processing to generate a two-dimensional matrix indicative of the velocity and the range of the detected objects.

In some embodiments, any of the elements, components, or blocks shown in the ensuing figures are implemented as one of software executing on a processor, hardware that is hard-wired (e.g., circuitry) to perform the various operations described herein, or a combination thereof. For example, in some embodiments, one or more of the described blocks or components (e.g., fast Fourier transform (FFT) and the inverse FFT (IFFT) components or blocks) represent software instructions that are executed by hardware such as a digital signal processor, an application-specific integrated circuit (ASIC), a set of logic gates, a field programmable gate array (FPGA), programmable logic device (PLD), or any other type of hardcoded or programmable circuit.

FIG. 1 shows an example of a radar transceiver 100 configured to implement OFDM radar sensing techniques in accordance with various embodiments. Radar transceiver 100 includes a radar transmitter 110 and a radar receiver 150 with hardware and software components configured to enable the integration of radar sensing (e.g., range, velocity, angle of direction, and/or material detection) with an OFDM-based wireless communication system. In some embodiments, radar transceiver 100 is coupled to a radar microcontroller or other central radar digital signal processor in a radar system including radar transceiver 100.

The radar transmitter 110 includes components that generate a digital chirp sequence, $x(m)$, in the time domain based on its corresponding frequency domain representation, $s(n)$. In some embodiments, the frequency domain representation, $s(n)$, is encoded with complex-valued modulation symbols using a modulation method such as one of various Phase-shift keying (PSK) or Quadrature amplitude modulation (QAM) methods. A serial-to-parallel converter (S/P) 112 receives $s(n)$ as an input and generates a plurality of parallel modulation symbols $s(0)$ to $s(Nc-1)$ at the output, where Nc is the number of subcarriers of the OFDM signal. IFFT block 114 receives the plurality of parallel modulation symbols and performs IFFT operations to convert the plurality of parallel modulation symbols from the frequency domain to the time domain. A parallel-to-serial converter (P/S) 116 receives the time-domain samples from the output of the IFFT block 114 and serializes the symbols into the digital chirp sequence, $x(m)$. In some embodiments, the digital chirp sequence, $x(m)$, is a fast digital chirp sequency signal that does not include data. In some embodiments, the digital chirp sequence, $x(m)$, is a complex signal that includes real (Re) and imaginary (Im) (i.e., I/Q) digital signal components. The Re and Im digital signal components 118, 120 are fed to digital-to-analog converters (DACs) 122, 124 which convert the Re and Im digital signal components into the analog domain. The output of the DACs 122, 124 is then quadrature modulated to the carrier frequency, $f_c$, at quadrature mixers 126, 128. The outputs of the quadrature mixers 126, 128 are fed to combiner 130 where they are added together prior to transmission via one or more transmit antennas 132 (one shown for clarity purposes) as radar signal 182.

After being transmitted by the one or more transmit antennas 132, the transmitted radar signal 182 propagates in the radar transceiver's 100 environment where it reflects off of one or more nearby objects 140 (one shown for clarity purposes). One or more receive antennas 152 (one shown for clarity purposes) receives the reflection of the radar signal 184. In some embodiments, the one or more receive antennas 152 include a plurality of receive antennas to support direction of arrival (DoA) calculations of the received reflection 184 of the radar signal. The received reflection 184 of the radar signal is routed to the quadrature mixers 154, 156 where it is I/Q demodulated with analogous quadrature signals as those applied at quadrature mixers 126, 128 to generate the I/Q analog components of the received signal. Analog-to-digital converters (ADCs) 158, 160 then convert the demodulated I/Q analog components to the digital domain, where they are subsequently added together at adder 164 to generate the digital representation of the received signal (also referred to as the received digital signal). The received digital signal is input to a mixer 166 along with the digital chirp sequence, $x(m)$ generated at the transmitter 110. In this manner, the mixer 166 and adder 164 operate as a digital de-chirper that multiples the transmitted digital chirp sequence, $x(m)$, by a complex conjugate (obtained by -j multiplier 162) of the received digital signal to generate a digital de-chirped signal at the output of the mixer 166. The digital de-chirped signal is input to S/P 168. S/P 168 generates a plurality of digital symbols at its output, which is input to the Velocity FFT 170. The Velocity FFT 170 performs an FFT in the slow time ($t_s$) to estimate the Doppler shift in the digital de-chirped signal. In this manner, the Velocity FFT 170 performs Doppler processing to estimate the Doppler shift. The estimated Doppler shift is used as the basis for the velocity estimation associated with the object 140. The output of the velocity FFT 170 is input to the Range FFT 172 which performs an FFT in the fast time ($t_\varepsilon$) to determine an estimate for the range of the object 140. In this manner, the Range FFT 173 performs range processing after the Doppler processing performed by the Velocity FFT. The output of the Range FFT 172 represents the range-Doppler matrix used to estimate the range and velocity of the object 140. In some embodiments, the receiver 150 includes additional signal processing components to estimate or measure other information related with the object 140 such as the angular direction (e.g., azimuth angle and/or elevation angle) of the object or its material.

Thus, in accordance with some embodiments, the radar transceiver 110 provides a digital chirp modulation on an OFDM transmitted sequence at the transmitter 110. The receiver 150 implements I/Q demodulation for baseband receiver processing followed by a digital de-chirping process involving a mixer (e.g., mixer 166 in FIG. 1) multiplying the digital transmitted sequence (i.e., x(m)) with the digital conversion of the received signal. This is followed by a first FFT (e.g., Velocity FFT 170 in FIG. 1) which performs the velocity estimation and then by a second FFT (e.g., Range FFT 172 in FIG. 1) which performs the range estimation. In some embodiments, according to the techniques described herein, the receiver 150 of the radar transceiver 100 does not include demultiplexing FFT processing, spectral data-removal (e.g., cyclic prefix removal), or impulse-response FFT processing since they are not necessary for demodulating and/or processing the received radar signal according to the techniques described herein. Thus, the radar transceiver 100 provides a simplified configuration at the receiver 150 while supporting radar sensing integration with OFDM-based wireless communication systems.

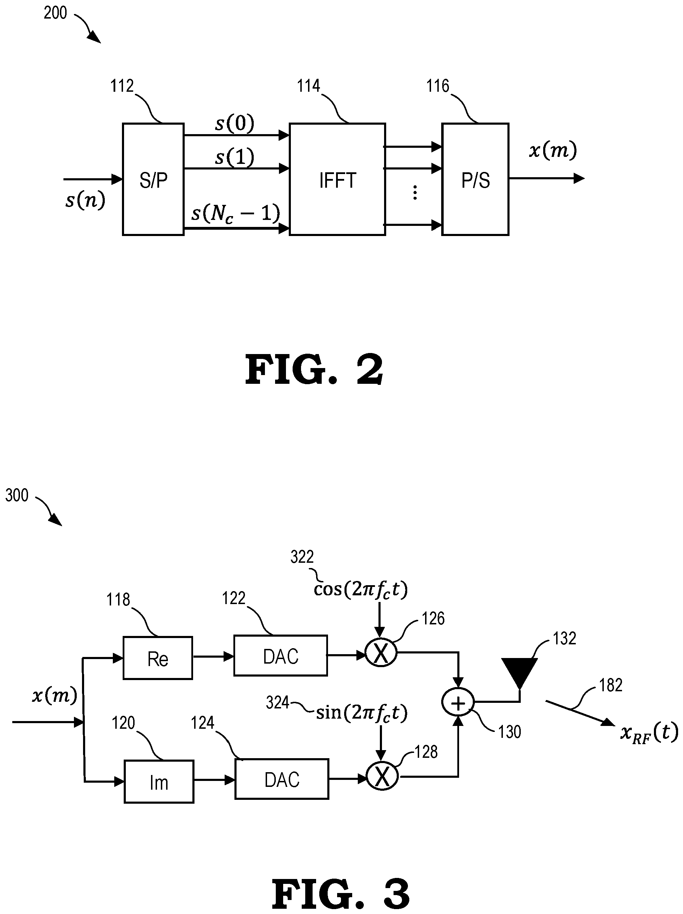

FIG. 2 shows an example sectional view 200 focusing on components 112-116 in the radar transmitter 110 shown in FIG. 1. As illustrated, components 112-116 generate a digital chirp sequence, x(m), in the time domain based on an input serial stream of symbols, s(n), in the frequency domain.

S/P 112 inputs the serial stream of symbols in s(n) and outputs a number of parallel symbol streams ranging from s(0) to s(Nc-1). In some embodiments, S/P 112 includes a set of D flip-flops (not shown) corresponding to the size of the serial data, in this case, s(n), to be transmitted. The serial data is delivered to the input of the first flip-flop in the set, and bits of the serial data are successively transferred to the next flip-flop on the rising or falling edge of an input clock signal. The parallelized output of S/P 112 is fed to the IFFT block 114 for conversion from the frequency domain to the time domain. The IFFT block 114 computes the inverse fast Fourier transform of the input to generate a time domain signal composed of a set of parallelized time domain samples that are then serialized at P/S 116 to generate the time domain representation of the digital chirp sequence, x(m). In some embodiments, the frequency representation, s(n), of the transmitted samples is

$$s(n) = e^{-j\frac{\pi}{4}} \exp\left(-j * \frac{\pi}{N_c} n^2\right)$$

represented by the equation and denotes the modulation symbol of the n-th carrier, where $n$ ranges from 0 to Nc-1 and j represents the imaginary unit $\sqrt{-1}$. In some embodiments, s(n) is denoted in terms of the

$$s(n) = \mathcal{F}\left\{\exp\left(j * \frac{\pi}{N_c} m^2\right)\right\}(n)$$

Fourier transform as , where $\mathcal{F}\{x\}$ is the Fourier transform, and $m \in [0, N_C-1)$. In

$$x(m) = \exp\left(j * \frac{\pi}{N_c} m^2\right)$$

some embodiments, x(m) is generated to have a form represented by the equation . In some embodiments, P/S 116 includes a set of D flip-flops. Each sample in the set of parallelized time domain samples is concurrently loaded into each D flip-flop in the set of D flip-flops and shifted (via clock input, not shown) one bit at a time from the last flip-flop so P/S 116 outputs the time domain samples in serial format as the digital chirp sequence, x(m).

FIG. 3 shows an example sectional view 300 focusing on components 118-132 in the radar transmitter 110 shown in FIG. 1. As illustrated, components 118-132 generate a radar signal for transmission from one or more transmit antennas based on the digital chirp sequence, x(m).

The digital chirp sequence, x(m), is a complex digital signal with real (Re) and imaginary (Im) digital components 118, 120, respectively. The Re 118 and Im 120 components of the digital chirp sequence, x(m), are input to DACs 122, 124 for conversion to the analog domain. The outputs of the DACs 122, 124 are fed as inputs to quadrature mixers 126, 128, respectively. Quadrature mixer 126 modulates the Re analog component output from DAC 122 with a quadrature signal 322 represented by $\cos(2\pi f_C t)$, where fc is the carrier frequency of the signal to be transmitted from one or more transmit antennas 132 and t is the time. Quadrature mixer 128 modulates the Im analog component output from DAC 124 with a quadrature signal 324 represented by $\sin(2\pi f_C t)$. Once modulated to the carrier frequency, fc, adder 130 adds the outputs from mixers 126, 128 together to generate the radar signal, $x_{RF}(t)$, 182 transmitted from one or more transit antennas 132. That is, $x_{RF}(t)$ is the time domain radio frequency (RF) waveform, and, in some embodiments, $x_{RF}(t)$ is represented by the equation $x_{RF}(t) = x(t)e^{j2\pi f c t}$, where $x(t) = \frac{1}{\sqrt{N_c}}\sum_{\mu=0}^{N_{sym}-1}\sum_{n=0}^{N_c-1} s[n,\mu] e^{j2\pi n f_\Delta t_f} \text{rect}\left(\frac{t_f+T_{CP}}{T_{\text{Chirp}}}\right)$, $t_f = t - \mu T_{SRI}$, and where Nc is the number of OFDM subcarriers, $N_{sym}$ is the number of OFDM symbols in one measurement cycle, $\mu$ is the chirp number, $f_\Delta$ is the subcarrier spacing, $t_f$ is the fast-time, $T_{CP}$ is the duration of the cyclic prefix which may be kept or set equal to zero, $T_{\text{Chirp}}$ is the chirp duration, $T_{SRI}$ is the symbol repetition interval of the OFDM radar and $\text{rect}(t/T_{\text{Chirp}})$ is the rectangular function of the duration $T_{\text{Chirp}}$.

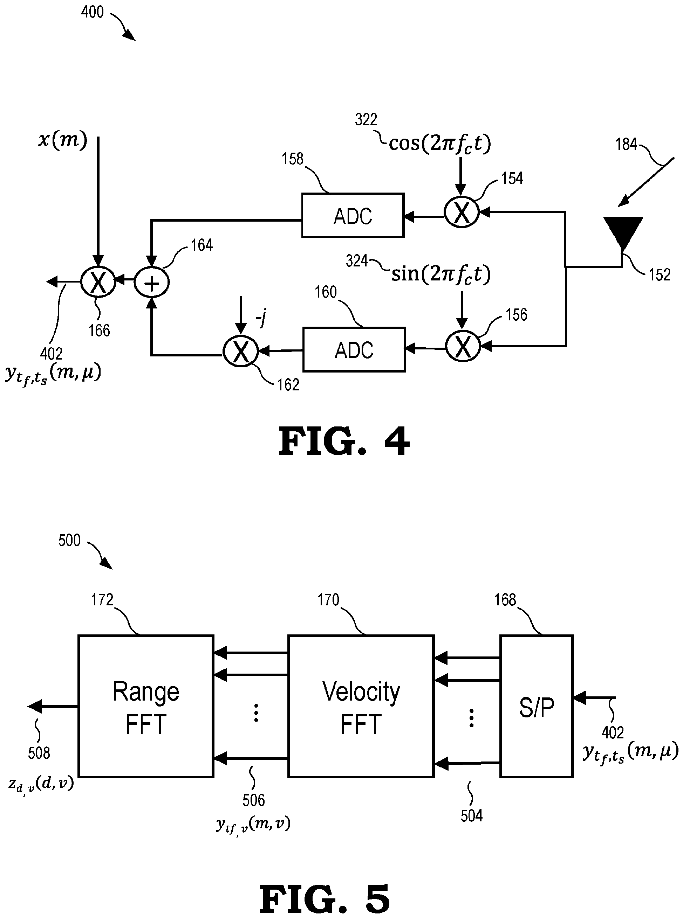

FIG. 4 shows an example sectional view 400 focusing on components 152-166 in the radar receiver 150 shown in FIG. 1. As illustrated, components 152-166 generate a de-chirped signal, $y_{t_f,t_s}(m, \mu)$, based on a radar reflection received at one or more receive antennas.

The reflection 184 of the radar signal is received at one or more receive antennas 152. After being received by the one or more receive antennas 152, the received reflection 184 is fed to quadrature mixers 154, 156 for I/Q demodulation with quadrature signals 322, 324 corresponding to those applied at quadrature mixers 126, 128 in FIG. 3. The ADCs 158, 160 convert the demodulated signals output from quadrature mixers 154, 156 from the analog domain into the digital domain. Adder 164 adds the output from the ADCs 158, 160 (with a complex conjugation by conjugate multiplier 162) together into a single digital signal representative of the received reflection 184. In some embodiments, the output of the adder 164 is referred to as the received digital signal. Then, mixer 166 mixes the received digital signal output from the adder 164 with the digital chirp sequence, x(m), to generate the digital de-chirped signal 402. In some embodiments, the digital de-chirped signal 402 is represented as:

$$y_{t_f,t_s}(m, \mu) = \sum_{i=0}^{N_{\text{path}}-1} \bar{\bar{a}}_i e^{-j\frac{4\pi}{N_c T_s c}md_i} e^{-j\frac{4\pi T_{SRI}f_c}{c}\mu v_i} e^{-j\frac{4\pi f_c T_s}{c}mv_i},$$

where $N_{\text{path}}$ is the number of propagation paths of the corresponding chirp of the radar signal, $\mu$ is the radar chirp number in the radar chirp sequence, $\bar{\bar{a}}_i$ is the normalized amplitude of object i, c is the speed of light, $T_s$ is the sampling time, $v_i$ is the speed of object i, and $d_i$ is the distance of object i from the radar system. In this manner, mixer 166 operates as a digital de-chirper by multiplying the transmitted digital chirp sequence with the complex conjugate of the received radar sequence.

FIG. 5 shows an example sectional view 500 focusing on components 168-172 in the radar receiver 150 shown in FIG. 1. As illustrated, components 168-172 generate a matrix indicative of a velocity estimate and a range estimate of one or more objects based on the de-chirped signal generated at the output of mixer 166 of FIG. 4.

The digital de-chirped signal 402 is input to S/P for parallelization into a plurality of digital symbols 504. The plurality of digital symbols 504 are input to the Velocity FFT 170, which performs an FFT in the slow time ($t_s$) dimension to perform Doppler-processing to estimate the velocity of an object based on the received reflected signal. The resulting signal 506 from the Velocity FFT 170, in some embodiments, is represented by the following equation,

$$y_{t_f,v}(m, v) = \sum_{i=0}^{N_{\text{path}}-1} \bar{\bar{a}}_i \delta(v - v_i) e^{-j\frac{4\pi}{N_c T_s c}md_i} e^{-j\frac{4\pi f_c T_s}{c}mv_i}$$ , where v is the variable representing the possible velocities of the detected objects (i.e., target, or object 140 in FIG. 1), and the delta-function $\delta$ represents the Kronecker delta function, which assumes non-zero values only when v is equal to $v_i$. In some embodiments, the term $e^{-j\frac{4\pi f_c T_s}{c}mv_i}$ affects every sample in the fast time ($t_f$). Therefore, in some cases, the resulting signal 506 is subject to a correction matrix C, which may be represented as:

$$C = \left[e^{-j2\pi\bar{f}_D(l)\frac{m}{N_c}}\right]_{\substack{0 \le m < N_c \\ 0 \le l < N_{sym}}} \in \mathbb{C}^{N_c \times N_{sym}},$$

where $\bar{f}_D$ is the normalized Doppler frequency. In some aspects, the correction matrix, C, is independent of the radar sensing scene. After correcting the resulting signal, $y_{t_f,v}(m, v)$, 506 with the correction matrix, C, the corrected resulting signal, $y'_{t_f,v}(m, v)$, from the Velocity FFT 170 can be represented as:

$$y'_{t_f,v}(m, v) = \sum_{i=0}^{N_{path}-1} \bar{\bar{a}}_i \delta(v - v_i) e^{-j\frac{4\pi}{N_c T_s c}md_i}.$$

In some embodiments, the corrected resulting signal, $y'_{t_f,v}(m, v)$, (or in the case where the correction matric, C, is not applied, $y_{t_f,v}(m, v)$) is input to the second FFT, i.e., the Range FFT 172, which performs an FFT in the fast-time ($t_\varepsilon$) dimension. In FIG 5, the non-corrected signal 506 is illustrated, but the corrected resulting signal, $y'_{t_f,v}(m, v)$, may be substituted in place of the non-corrected signal 506. After the FFT in the fast-time dimension, the resulting signal, $z_{d,v}(d, v)$, 508 output from the Range FFT 172 represents the range-Doppler matrix. In some embodiments, the output signal 508 is represented as:

$$z_{d,v}(d, v) = \sum_{i=0}^{N_{\text{path}}-1} \bar{\bar{a}}_i \delta(v - v_i)\delta(d - d_i),$$

where d is the distance variable representing the possible distances of the detected objects, and the second Kronecker delta function $\delta(d - d_i)$ assumes non-zero values only when d is equal to $d_i$.

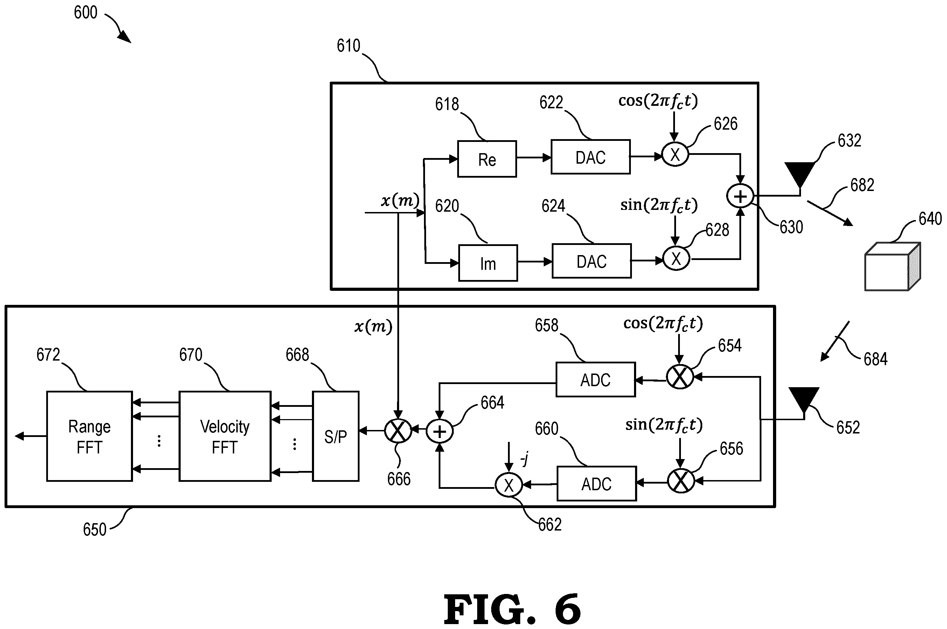

FIG. 6 shows an example of another embodiment of a radar transceiver 600 in accordance with various embodiments. In some embodiments, radar transceiver 600 largely corresponds to the radar transceiver 100 depicted in FIG. 1 with the exception that radar transceiver 600 is simplified in that the components 112-116 are absent in the radar transmitter 610. That is, the radar transmitter 610 is configured to receive the digital chirp sequence, x(m), in the time domain from another component in the radar system (e.g., from a digital signal processor at a radar microcontroller coupled to the radar transceiver 600). Thus, components 618-632 in the radar transmitter 610 correspond to components 118-132 in radar transmitter 110 in FIG. 1, and components 652-672 in radar receiver 650 correspond to components 152-172 in radar receiver 150 in FIG. 1. Similarly, signals 682, 684 correspond to signals 182, 184, respectively, in FIG. 1, and object 640 corresponds to object 140 in FIG. 1.

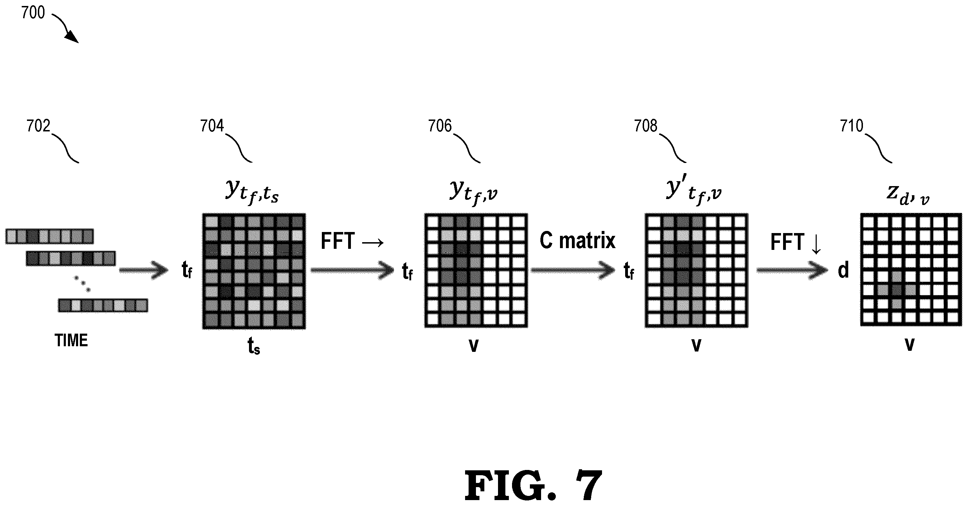

FIG. 7 shows an example series of OFDM radar signal processing diagrams 700 illustrating the processing of the waveforms associated with the received radar signal after it has been I/Q demodulated and digitized in the receiver 150. That is, the diagrams 700 illustrate various processing stages of the waveforms as they are generated by the chain of components 168-172 in the receiver 150.

Diagram 702 represents the digital time domain symbols of the received signal. For example, in some embodiments, diagram 702 illustrates the received signal $y_{t_f, t_s}(m, \mu)$ input to S/P 168 of FIG. 1. Diagram 704 represents the fast time ($t_\varepsilon$) and slow time ($t_s$) matrix ($y_{t_f, t_s}$) input to the Velocity FFT 170 (also referred to as the first FFT). For example, in some embodiments, diagram 704 represents the waveform after being parallelized by S/P 168 (e.g., the waveform represented by the plurality of digital symbols in signal 504 in FIG. 5). The Velocity FFT 170 applies an FFT in the slow time ($t_s$) to the waveform represented by the matrix in diagram 704 to generate a waveform represented by the matrix in diagram 706. As illustrated, the matrix in diagram 706 includes data indicative of the velocity, v, in the horizontal direction of the matrix (i.e., the rows of the input matrix). In some embodiments, as previously discussed, a correction matrix (C matrix) is applied after the Velocity FFT to yield a waveform represented by matrix, $y'_{t_f, v}(m, v)$, depicted in diagram 708. Then, the Range FFT 172 (also referred to as a second FFT) applies an FFT in the fast time ($t_\varepsilon$) (i.e., the columns of the input matrix) to generate a waveform represented by the final range-velocity (d-v) matrix depicted in diagram 710. For example, in some embodiments, the waveform illustrated by the matrix in diagram 710 corresponds to the output 508 of the Range FFT 172. As demonstrated by the diagrams 700, by generating the digital de-chirped signal at the output of the mixer 166, the velocity and range estimation process can be implemented by a first FFT that is Doppler-specific to generate the velocity estimate portion of the final range-velocity matrix depicted in diagram 710 followed by a second FFT that is Range-specific to generate the range estimate portion of the final range-velocity matrix depicted in diagram 710. As shown in diagram 700, there is no spectral data processing or removal operation that is needed to generate the final range-velocity matrix depicted in diagram 710. Thus, this simplifies the OFDM radar receiver architecture.

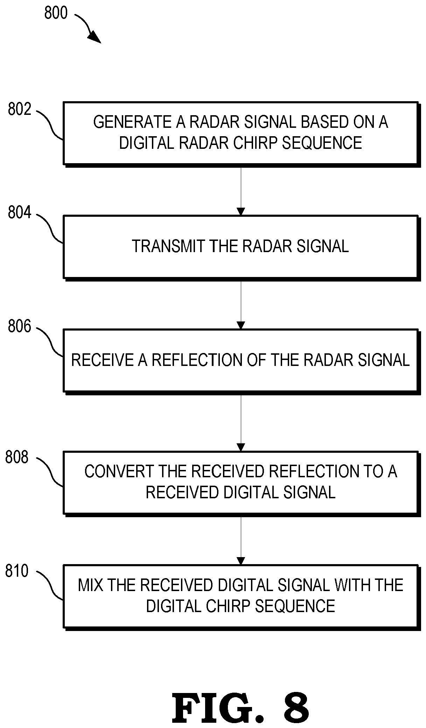

FIG. 8 shows an example of a flowchart 800 describing a method for OFDM radar signal generation and processing according to various embodiments. At 802, a radar transmitter in a radar transceiver generates a radar signal to be transmitted from one or more transmit antennas based on a digital radar chirp sequence (herein, also referred to as a digital chirp sequence for short). For example, in some embodiments, this includes radar transmitter 110 of radar transceiver 100 generating a radar signal 182 to transmit from one or more transmit antennas 132 based on digital chirp sequence, x(m). At 804, the radar transmitter transmits the radar signal. At 806, a radar receiver in the radar transceiver receives one or more reflections of the radar signal. For example, in some embodiments, this includes one or more receive antennas 152 of the radar receiver 150 in radar transceiver 100 receiving radar reflection 184. At 808, the radar receiver converts the received reflection to a received digital signal. For example, in some embodiments, this includes I/Q demodulating the received radar reflection at mixers 154, 156, converting the I/Q demodulated signal to a digital signal at ADCs 158, 160, and adding the digitized I/Q demodulated components together at adder 164. At 810, the radar receiver mixes the received digital signal generated at block 808 with the digital chirp sequence from block 802. For example, in some embodiments, this includes mixer 166 multiplying the received digital signal output from adder 164 with the digital chirp sequence, x(m), that is generated at transmitter 110. By mixing the received digital signal with the digital chirp sequence at block 810, the radar receiver generates a digital de-chirped signal that is used as the basis for a velocity estimation followed by a range estimation of one or more objects associated with the received radar reflection.

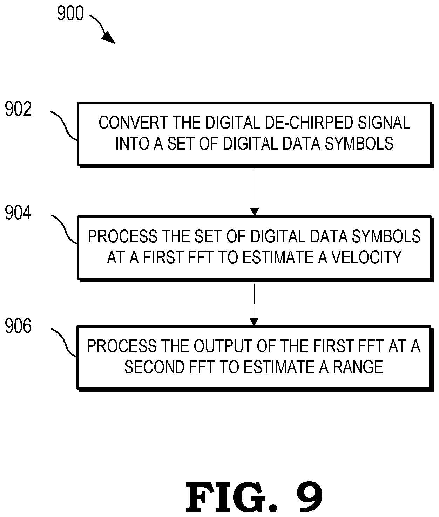

FIG. 9 shows an example of a flowchart 900 describing a method for velocity and range estimation based on the digital de-chirped signal generated by the process described in FIG. 8. In some embodiments, at 902, the digital de-chirped signal is converted into a set of digital data symbols. For example, in some embodiments, this includes the S/P 168 generating the set of digital data symbols based on the output from mixer 166. At 904, a first FFT processing component applies a first FFT in a first dimension to the set of digital data symbols to estimate a velocity associated with the received radar reflection. For example, in some embodiments, this includes Velocity FFT 170 applying an FFT in the slow time ($t_s$) to generate an output corresponding to the matrix illustrated in diagram 706. At 906, a second FFT processing component applies a second FFT in a second dimension to the set of digital data symbols to estimate a range associated with the received radar reflection. For example, in some embodiments, this includes Range FFT 172 applying an FFT in the fast time ($t_\varepsilon$) to generate an output corresponding to the matrix illustrated in diagram 710. Thus, in some embodiments, the output of the second FFT processing component generates information indicative of a range and a velocity of the objects associated with the received radar reflection.

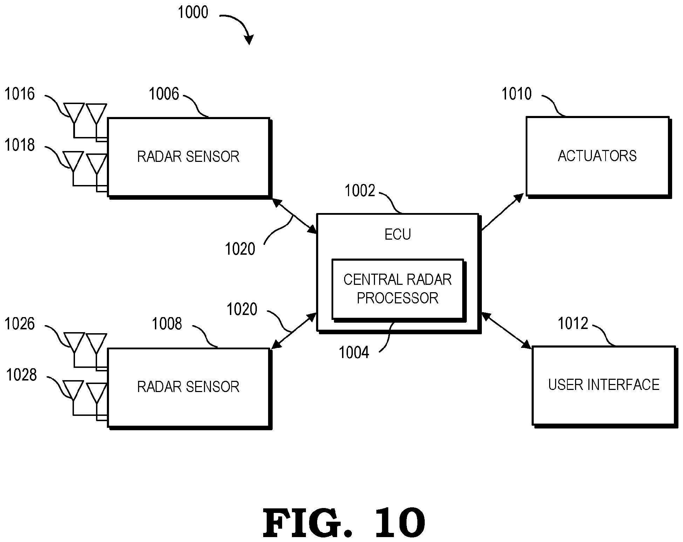

FIG. 10 shows an example of a vehicular control system 1000 in accordance with some embodiments. The vehicular control system 1000 may be implemented, for example, in an automobile and may be used to assist in driver-assistance or autonomous driving functions. It is appreciated that vehicular control system 1000 is simplified for purposes of this explanation and may include additional components associated with the operation of an automobile. In some embodiments, the vehicular control system 1000 includes a radar system including radar sensors 1006, 1008 and a central radar processor 1004.

In some embodiments, the vehicular control system 1000 includes an electronic control unit (ECU) 1002. The ECU 1002 includes the central radar processor 1004 as well as other processing circuitry, e.g., a central processing unit (CPU), to perform various processing functions related to vehicular control. The central radar processor 1004 is coupled to radar sensors 1006, 1008 via interfaces 1020. While two radar sensors 1006, 1008, are shown in FIG. 10, this number is for clarity purposes and may be scalable to a larger quantity. In some embodiments, the radar sensors 1006, 1008 are located at various positions around an automobile housing vehicular control system 1000. For example, one radar sensor 1006 may be at the front end of the automobile and the other radar sensor 1008 may be at the rear end of the automobile. In some embodiments, radar sensor 1006 includes a plurality of antennas 1016, 1018. For example, plurality of antennas 1016 are transmission antennas and plurality of antennas 1018 are reception antennas. Similarly, in some embodiments for radar sensor 1008, plurality of antennas 1026 are transmission antennas and plurality of antennas 1028 are reception antennas. In some embodiments, the plurality of antennas associated with each of radar sensors 1006, 1008 support MIMO radar configurations. While two antennas are shown for each of the plurality of antennas 1016, 1018, 1026, 1028, this number is for clarity purposes and may be scalable to larger quantities (e.g., three, four, or more antennas) in some embodiments.

In some embodiments, the central radar processor 1004 is implemented as a microcontroller unit (MCU) or other processing unit that is configured to execute radar signal processing tasks such as, but not limited to, object identification, computation of object distance, object velocity, and object direction (collectively referred to as "radar information"). In some embodiments, central radar processor 1004 is additionally configured to generate control signals based on the radar information. The central radar processor 1004 may, for example, be configured to generate calibration signals, receive data signals, receive sensor signals, generate frequency spectrum shaping signals (such as signals associated with the OFDM radar techniques described herein) and/or state machine signals for radio frequency (RF) circuit enablement sequences. In addition, the central radar processor 1004 may be configured to program the radar sensors 1006, 1008 to operate in a coordinated fashion by transmitting MIMO waveforms for use in constructing a virtual aperture from a combination of the distributed apertures formed by the plurality of transmission and reception antennas shown in FIG. 10.

In some embodiments, radar sensors 1006, 1008 include a radar front end chip that is coupled to the respective pluralities of antennas to transmit radar signals (e.g., in the form of radar chirp sequences), to receive reflected radar signals, and to digitize these received radar signals for forwarding to the central radar processor 1004 over interface 1020. In some embodiments, the central radar processor 1004 performs radar processing tasks based on the digitized radar signals received from the radar front end chips in the radar sensors 1006, 1008 to provide radar information to the ECU 1002. The ECU 1002 can then use this radar information to control one or more actuators 1010 such as a steering actuator, braking actuator, or throttle actuator to assist in driver-assistance or autonomous driving functions. In some embodiments, the ECU 1002 displays the radar information or associated information via a user interface 1012 such as a screen display, a speaker, or a light (e.g., in a side mirror or on a dashboard) to alert the driver of nearby objects.

In some embodiments, the OFDM techniques described herein are performed at one or more of the components illustrated in FIG. 10. For example, in some embodiments, the OFDM signal generation, transmission, received signal processing, digital de-chirping, and FFT processing techniques are performed by a radar sensor such as radar sensor 1006, 1008, by a central radar processor such as central radar processor 1004, or a combination thereof.

Thus, in some embodiments, the OFDM techniques described herein and illustrated in FIGs. 1-10 present techniques including a de-chirping method involving time multiplication of the complex conjugate of the received discrete-time samples with the discrete-time radar chirp samples generated at the transmitter. This allows for the digital alignment of the de-chirped signal so that there are few, if any, limitations on the length of the chirp with respect to the Time of Flight (ToF). Additionally, the I/Q modulation and demodulation techniques described herein allow for the digital waveform processing of waveforms with negative frequencies. Finally, the sequence of FFT processing (e.g., first in the slow time to generate velocity (v) estimation data then in the fast time to generate range or distance (d) estimation data) along with the application of the correction matrix (C) to compensate for Doppler shifts due to velocity is independent of the radar channel of targets. This results in the advantage of supporting radar sensing functionality in an OFDM system at a reduced complexity.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disk, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory) or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed is not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A radar transceiver comprising:

   a radar transmitter comprising:

   generation circuitry to generate a digital radar chirp sequence;
   one or more digital-to-analog converters to convert the digital radar chirp sequence into a radar signal to be transmitted via one or more transmit antennas; and

   a radar receiver comprising:

   one or more analog-to-digital converters to convert a received reflection of the radar signal to a received digital signal; and
   a mixer to mix the received digital signal with the digital radar chirp sequence to generate a digital de-chirped signal for velocity processing followed by range processing.

2. The radar transceiver of claim 1, wherein the radar transmitter is an orthogonal frequency digital multiplexing (OFDM) transmitter.

3. The radar transceiver of claim 1 or 2, the radar receiver comprising a serial-to-parallel converter to parallelize the digital de-chirped signal into a plurality of digital data streams.

4. The radar transceiver of any claim of claims 1 to 3, the radar receiver comprising a first fast Fourier transform (FFT) component to apply a first FFT to data in the digital de-chirped signal in a first dimension corresponding to a slow time to generate velocity information associated with the received reflection.

5. The radar transceiver of claim 4, the radar receiver comprising a second FFT component after the first FFT component to apply a second FFT to data in the digital de-chirped signal in a second dimension corresponding to a fast time to generate range information associated with the received reflection.

6. The radar transceiver of any claim of claims 1 to 7, wherein the generation circuitry comprises a serial-to-parallel converter to convert a signal representative of a radar waveform into a plurality of radar symbols over different frequency carriers.

7. The radar transceiver of claim 6, wherein the generation circuitry comprises an inverse fast Fourier transform (FFT) component and a parallel-to-serial converter to receive the plurality of radar symbols and generate the digital radar chirp sequence.

8. The radar transceiver of any claim of claims 1 to 7, wherein a cyclic prefix is absent from the digital radar chirp sequence.

9. The radar transceiver of any claim of claims 1 to 8, wherein the radar transmitter comprises one or more transmit antennas to transmit the radar signal.

10. The radar transceiver of any claim of claims 1 to 9, wherein the radar receiver comprises one or more receive antennas to receive the received reflection of the radar signal.

11. A method comprising:

generating, at a transmitter of a radar transceiver, a radar signal for transmission based on a digital radar chirp sequence generated using orthogonal frequency digital multiplexing (OFDM);
transmitting the radar signal via one or more transmit antennas of the transmitter;
receiving a reflection of the radar signal at one or more receive antennas coupled to a receiver of the radar transceiver;
converting, at one or more analog-to-digital converters, the received reflection to a received digital signal; and
mixing the received digital signal with the digital radar chirp sequence to generate a digital de-chirped signal for velocity processing followed by range processing.

12. The method of claim 11, further comprising converting the digital radar chirp sequence into the radar signal via one or more digital-to-analog converters.

13. The method of claim 11 or 12, further comprising parallelizing the digital de-chirped signal into a plurality of digital data streams prior to the velocity processing and the range processing.

14. The method of claim 13, further comprising performing the velocity processing of the received reflection based on the plurality of digital data streams.

15. The method of claim 13 or 14, further comprising performing the range processing based on a result of the velocity processing.

FIG. 1

200

112                          114                    116

s(0)
s(1)
s(n)  →  S/P              IFFT              P/S   →  x(m)
s(N_c − 1)

# FIG. 2

300

322
$\cos(2\pi f_c t)$

118                122                              126                  132

                                                                         182
x(m)  →  Re  →  DAC  →  ⊗                    ▼
                                             +  →  $x_{RF}(t)$
        120       124        324  $\sin(2\pi f_c t)$     130
              Im  →  DAC  →  ⊗
                                   128

# FIG. 3

$x(m)$

$322$ $\cos(2\pi f_c t)$

$158$

ADC

$154$

$184$

$\times$

$152$

$164$

$166$

$+$

$402$

$y_{t_f, t_s}(m, \mu)$

$324$ $\sin(2\pi f_c t)$

$160$

$-j$

$\times$

ADC

$156$

$\times$

$162$

## FIG. 4

$500$

$172$

$170$

$168$

Range FFT

$508$

$z_{d,v}(d, v)$

$\vdots$

Velocity FFT

$506$

$y_{tf,v}(m, v)$

$\vdots$

S/P

$402$

$y_{t_f, t_s}(m, \mu)$

$504$

## FIG. 5

**FIG. 6**

700

702

704 $y_{t_f, t_s}$

706 $y_{t_f, v}$

708 $y'_{t_f, v}$

710 $z_{d, v}$

TIME

$t_f$    FFT $\rightarrow$    $t_f$    C matrix    $t_f$    FFT $\downarrow$    d

$t_s$         v          v         v

**FIG. 7**

800

802 — GENERATE A RADAR SIGNAL BASED ON A DIGITAL RADAR CHIRP SEQUENCE

804 — TRANSMIT THE RADAR SIGNAL

806 — RECEIVE A REFLECTION OF THE RADAR SIGNAL

808 — CONVERT THE RECEIVED REFLECTION TO A RECEIVED DIGITAL SIGNAL

810 — MIX THE RECEIVED DIGITAL SIGNAL WITH THE DIGITAL CHIRP SEQUENCE

# FIG. 8

900

902  CONVERT THE DIGITAL DE-CHIRPED SIGNAL
INTO A SET OF DIGITAL DATA SYMBOLS

904  PROCESS THE SET OF DIGITAL DATA SYMBOLS
AT A FIRST FFT TO ESTIMATE A VELOCITY

906  PROCESS THE OUTPUT OF THE FIRST FFT AT A
SECOND FFT TO ESTIMATE A RANGE

# FIG. 9

1000

1016

1006

RADAR SENSOR

1018

1010

ACTUATORS

1002

ECU

1020

CENTRAL RADAR
PROCESSOR

1004

1026

1008

1020

1012

1028

RADAR SENSOR

USER INTERFACE

# FIG. 10

Europäisches
Patentamt

European
Patent Office

Office européen
des brevets

# EUROPEAN SEARCH REPORT

**Application Number**

EP 24 19 1225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 325 703 A (UNIV XIAN ELECTRONIC SCIENCE & TECHNOLOGY) 12 April 2022 (2022-04-12) | 1,3,13 | INV. G01S7/35 G01S13/32 |
| A | * paragraphs [0011], [0013], [0015], [0016], [0032] - [0034], [0042], [0072] - [0074], [0080], [0085], [0009]; figures 1,2 * | 2,4-12, 14,15 | G01S13/34 G01S13/58 |
| X | US 2022/214423 A1 (MARKISH OFER [IL] ET AL) 7 July 2022 (2022-07-07) * paragraphs [0127] - [0129], [0131], [0133], [0142], [0147], [0148], [0155] - [0158], [0162] - [0166], [0184] * * paragraphs [0185], [0067], [0071]; figures 1,3,4,5,8 * | 1-15 | |

**TECHNICAL FIELDS SEARCHED (IPC)**

G01S

The present search report has been drawn up for all claims

| Place of search | Date of completion of the search | Examiner |
|---|---|---|
| Munich | 8 January 2025 | Metz, Carsten |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  .............................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 1225

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2025

| Patent document cited in search report | | Publication date | Patent family member(s) | | Publication date |
|---|---|---|---|---|---|
| CN 114325703 | A | 12-04-2022 | NONE | | |
| US 2022214423 | A1 | 07-07-2022 | NL | 2029866 A | 20-07-2022 |
| | | | TW | 202226670 A | 01-07-2022 |
| | | | US | 2022214423 A1 | 07-07-2022 |
| | | | US | 2024418825 A1 | 19-12-2024 |
| | | | WO | 2022139844 A1 | 30-06-2022 |

EPO FORM P0459

For more details about this annex : see Official Journal of the European Patent Office, No. 12/82